(19) Europäisches Patentamt
European Patent Office
Office européen des brevets

(11) Numéro de publication: 0 184 482 A1

(12) # DEMANDE DE BREVET EUROPEEN

(21) Numéro de dépôt: 85402166.4

(22) Date de dépôt: 08.11.85

(51) Int. Cl.⁴: C 08 F 20/30
C 09 K 19/38

(30) Priorité: 13.11.84 FR 8417292

(43) Date de publication de la demande: 11.06.86 Bulletin 86/24

(84) Etats contractants désignés: BE CH DE GB LI NL

(71) Demandeur: THOMSON-CSF
173, Boulevard Haussmann
F-75379 Paris Cedex 08(FR)

(72) Inventeur: Decobert, Guy
THOMSON-CSF SCPI 173, bld Haussmann
F-75379 Paris Cedex 08(FR)

(72) Inventeur: Dubois, Jean-Claude
THOMSON-CSF SCPI 173, bld Haussmann
F-75379 Paris Cedex 08(FR)

(72) Inventeur: Soyer, Françoise
THOMSON-CSF SCPI 173, bld Haussmann
F-75379 Paris Cedex 08(FR)

(74) Mandataire: Lepercque, Jean et al,
THOMSON-CSF SCPI 19, avenue de Messine
F-75008 Paris(FR)

(54) **Polymères thermotropes à chaines latérales ayant une structure chirale et leur procédé de fabrication.**

(57) L'invention concerne une famille de polymères thermotropes du type à groupe latéral mésogène, présentant au moins une phase mésomorphe et obtenue à partir d'un monomère de formule chimique générale:

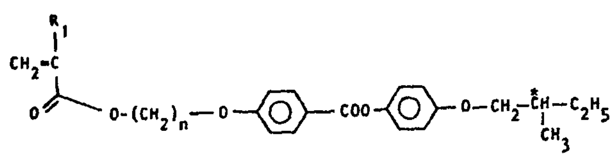

dans laquelle $R_1 = CH_3$, Cl ou H et $2 \leq n \leq 11$.

Applications à l'optique non linéaire, à la préparation de filtres, de réflecteurs, d'appareils de mesure de forces.

EP 0 184 482 A1

Croydon Printing Company Ltd

# POLYMERES THERMOTROPES A CHAINES LATERALES AYANT UNE STRUCTURE CHIRALE ET LEUR PROCEDE DE FABRICATION

L'invention concerne une famille de nouveaux polymères thermotropes à chaînes latérales possédant une structure chirale. La famille de composés selon l'invention est formée à partir d'un monomère répondant à la formule chimique générale :

$$CH_2 = C\ (R_1) - COO - (CH_2)_n - OR_2$$

dans laquelle : $R_1$ est le groupe méthyle, l'hydrogène ou le chlore, n est un entier compris entre 2 et 11, $R_2$ est le groupe

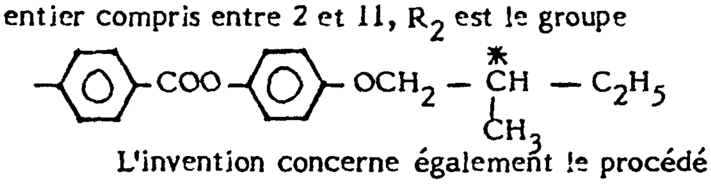

L'invention concerne également le procédé de fabrication des molécules de cette famille.

Après l'extraordinaire développement de la recherche sur les cristaux liquides des quinze dernières années, dû surtout à leur potentiel d'utilisation pratique (simplicité de mise en oeuvre, faibles tensions de commande, faible consommation), de nombreuses équipes de recherche se sont tournées vers les polymères mésomorphes. Les polymères mésomorphes thermotropes sont des macromolécules possédant pour un certain intervalle de températures souvent assez élevées, des phases anisotropes dites smectiques ou nématiques. Ils comprennent une classe de polymères à groupes latéraux mésogènes et une autre classe dont le groupe mésogène est compris dans la chaîne. La présente invention concerne une famille de polymères de la première classe citée.

Tandis que les cristaux liquides de faible poids moléculaire cristallisent à basse température, la plupart des polymères thermotropes à chaînes latérales sont amorphes et sont caractérisés par une température de transition vitreuse Tg. Tant la texture macroscopique que le paramètre d'ordre des mésophases peuvent être gelés dans l'état vitreux. On peut par suite obtenir des films ayant des propriétés optiques anisotropes et qui sont utilisables dans des dispositifs relevant du domaine de l'optique non linéaire.

De même, l'étude des phases cholestériques permet d'envisager la préparation de filtres, de réflecteurs et d'appareils de mesure de forces. Il est possible en effet d'obtenir entre autres, par l'intermédiaire des matériaux selon l'invention des polymères thermotropes cholestériques.

Enfin, les valeurs des tensions de seuil et des intervalles de temps nécessaires à l'orientation des mésophases placées dans un champ électrique étant du même ordre de grandeur que celles des cristaux liquides de bas poids moléculaire, on peut penser que ces polymères pourront être utilisés dans les dispositifs de visualisation destinés au stockage d'information.

L'invention a donc pour objet un polymère thermotrope du type à groupe latéral mésogène et présentant au moins une phase mésomorphe, caractérisé en ce qu'il est obtenu par polymérisation d'au moins un monomère $M_1$ de formule chimique générale :

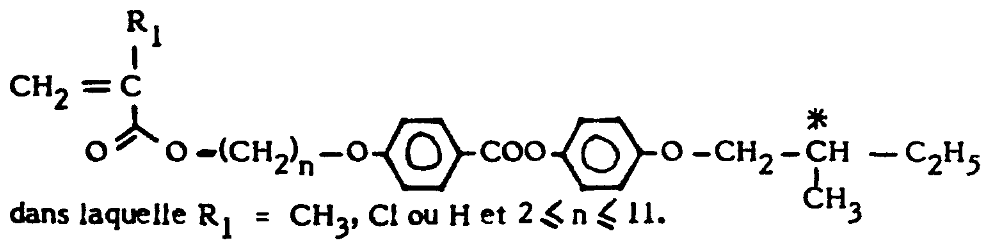

dans laquelle $R_1$ = $CH_3$, Cl ou H et $2 \leqslant n \leqslant 11$.

L'invention a aussi pour objet un procédé de fabrication d'un tel composé organique caractérisé en ce qu'il comprend les étapes suivantes :

- 1ère étape : synthèse du 2 méthyl 1 bromobutane par action du tribromure de phosphore sur le 2 méthyl 1 butanol,
- 2ème étape : synthèse du 4 (3 méthylbutyloxyphénol) par action du 2 méthyl 1 bromobutane obtenu à la 1ère étape sur l'hydroquinone,
- 3ème étape : synthèse du para hydroxy benzoate de méthyle par estérification de l'acide 4 hydroxy benzoïque,
- 4ème étape : synthèse du para [hydroxyalkyloxy] benzoate de méthyle par action de l'ω-bromoalcanol sur le para hydroxy benzoate de méthyle obtenu à la 3ème étape,
- 5ème étape : synthèse de l'acide para [hydroxyalkyloxy] benzoïque par saponification de l'ester obtenu à la 4ème étape,
- 6ème étape : synthèse de l'acide 4 [méthacryloyloxy] alkyloxy benzoïque, de l'acide 4 [acryloyloxy] alkyloxy benzoïque ou de l'acide 4 [α - chloroacryloyloxy] alkyloxy benzoïque par estérification azéotropique de

l'acide obtenu à la 5ème étape avec l'acide méthacrylique, acrylique ou α- chloroacrylique ,

- 7ème étape : chloruration de l'acide obtenu à la 6ème étape,

- 8ème étape : synthèse du monomère $M_1$ par réaction du chlorure d'acide obtenu à la 7ème étape et de l'alkoxyphénol obtenu à la 2ème étape,

- et 9ème étape : polymérisation du monomère $M_1$ seul ou en présence d'au moins un autre monomère.

L'invention sera mieux comprise et d'autres avantages apparaîtront au moyen de la description qui va suivre et des figures annexées parmi lesquelles :

- la figure 1 est un diagramme d'analyse enthalpique différentielle d'un polymère thermotrope selon l'art connu,

- les figures 2 et 3 sont des diagrammes d'analyse enthalpique différentielle de copolymères thermotropes selon l'invention.

La description va porter sur le procédé général de synthèse des molécules selon l'invention ainsi que sur les propriétés mésomorphes des polymères thermotropes correspondants. De plus, des exemples d'applications potentielles pour ces produits seront donnés.

<u>PROCEDE GENERAL DE SYNTHESE</u>

Les composés selon l'invention sont obtenus en 9 étapes à partir des produits commerciaux suivants : le 2 méthyl 1 butanol, l'acide 4 hydroxy benzoïque et d'un ω-bromoalcanol.

<u>Réaction 1</u> : Obtention du 2 méthyl 1 bromobutane.

Ce dérivé bromé est obtenu par action du tribromure de phosphore sur le 2 méthyl 1 butanol en présence de pyridine à une température de 10°C.

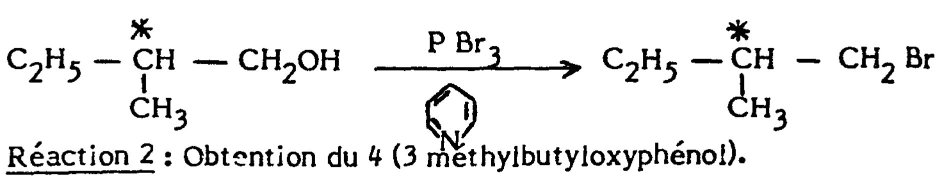


<u>Réaction 2</u> : Obtention du 4 (3 méthylbutyloxyphénol).

Le 4 (3 méthylbutyloxyphénol) est obtenu par action du 2 méthyl 1 bromobutane, obtenu à l'issue de la réaction 1, sur l'hydroquinone en

présence d'une solution alcoolique de potasse.

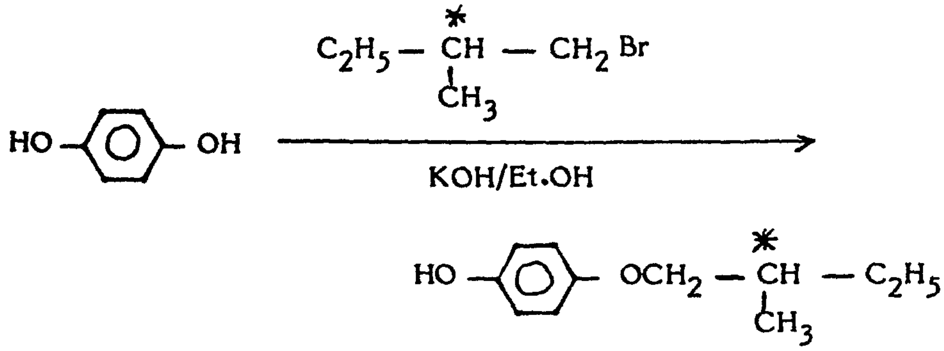


<u>Réaction 3</u> : Obtention du para hydroxy benzoate de méthyle.

Ce dérivé est obtenu par une méthode d'estérification classique de l'acide 4 hydroxy benzoïque décrite par RIEGEL, MOFFET et McINTOSH dans Organic Syntheses, vol.3, p 327. La réaction s'effectue par action du chlorure d'acétyle en présence de méthanol.

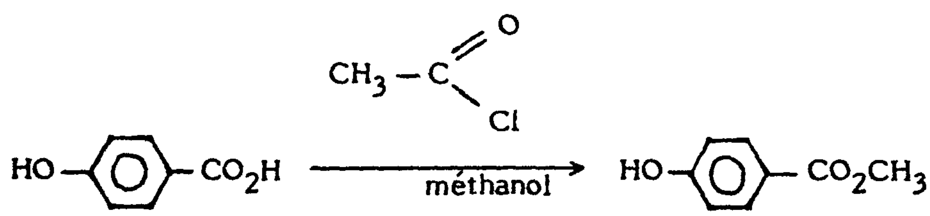


<u>Réaction 4</u> : Préparation du para [hydroxyalkyloxy] benzoate de méthyle.

Ce dérivé est obtenu par l'action de l'ω-bromoalcanol sur le parahydroxy benzoate de méthyle, obtenu à l'issue de la réaction 3, en présence d'une solution alcoolique de potasse.

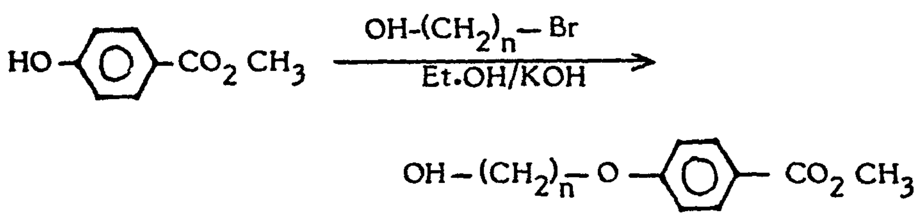


<u>Réaction 5</u> : Préparation de l'acide para [hydroxyalkyloxy] benzoïque.

Cet acide est obtenu par la saponification de l'ester obtenu à l'issue de la réaction 4.

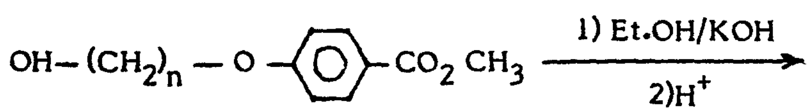

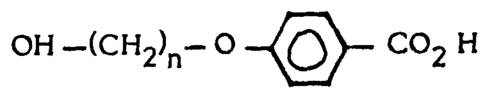

Réaction 6 : Préparation de l'acide 4 [méthacryloyloxy] alkyloxy benzoïque, de l'acide 4 [acryloyloxy] alkyloxy benzoïque ou de l'acide 4 [α - chloroacryloyloxy] alkyloxy benzoïque.

L'acide obtenu à l'issue de la réaction 5 subit une estérification azéotropique dans un dispositif du type Dean-Stark (qui permet d'éliminer l'eau au fur et à mesure de son apparition au cours de la réaction) avec l'acide méthacrylique, acrylique ou α - chloroacrylique en présence d'acide p toluène sulfonique (noté APTS).

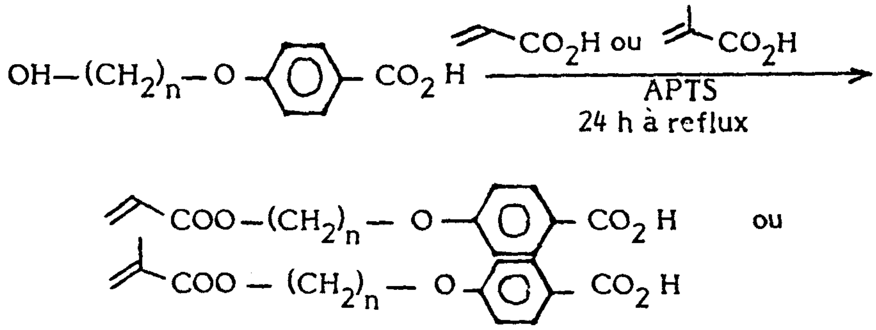


Réaction 7 : Obtention du chlorure d'acide correspondant à l'acide obtenu par la réaction 6 par action du chlorure de thionyle à température ambiante en présence de 2,6 diterbutylphénol.

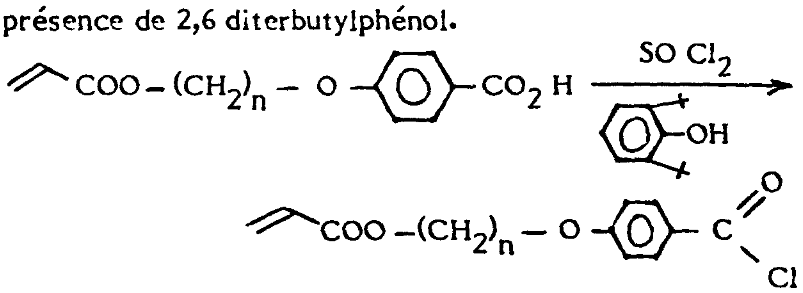


La réaction est identique pour l'obtention des chlorures de l'acide 4 [méthacryloyloxy] alkyloxy benzoïque ou de l'acide 4 [α - chloroacryloyloxy] alkyloxy benzoïque.

Réaction 8 : Obtention du monomère.

Le 4 [méthacryloyloxyalkyloxy] benzoate de 4' [3 méthylbutyloxy] phényl est réalisé à partir du chlorure d'acide correspondant obtenu à l'issue de la réaction 7 et de l'alkoxyphénol obtenu par la réaction 2. La réaction s'effectue à température ambiante en présence de triéthylamine dans le

tétrahydrofuranne (THF).

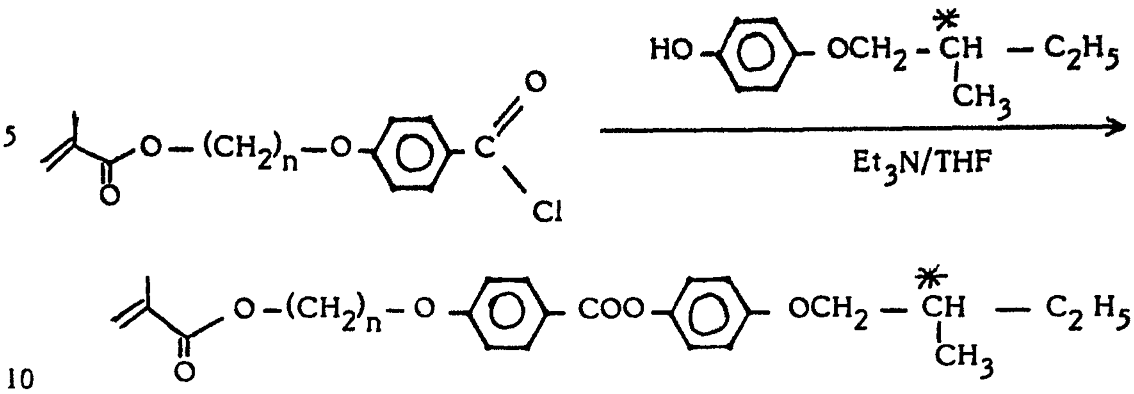


Le monomères acrylique et $\alpha$ – chloroacrylique sont obtenus de la même façon que le monomère méthacrylique.

Réaction 9 : Elaboration du polymère.

La polymérisation se fait à partir du monomère obtenu à la réaction 8 en présence d'AIBN (2-2'azoisobutyronitrile) dans le toluène pendant une douzaine d'heures, à 60°C et sous tube scellé.

MODES OPERATOIRES

La partie de la description qui va suivre portera sur la mise au point de quelques modes opératoires du procédé général de synthèse, les autres étapes étant du domaine de l'art connu.

. Réaction 2 : synthèse du 4 [3 méthylbutyloxyphénol].

Dans un erlenmeyer de 250 ml muni d'un réfrigérant à reflux et d'une ampoule à brome, on introduit 30,8 g d'hydroquinone (soit 0,28 mole) et 50 ml d'éthanol. On chauffe légèrement pour dissoudre l'hydroquinone. On ajoute alors goutte à goutte 43 g de 2 méthyl 1 bromobutane (soit 0,28 mole) et le mélange est porté à reflux. On charge la potasse en solution aqueuse (16,6 g dans 50 cc d'eau) et la solution est laissée à reflux pendant 3 heures. A ce stade, la solution est de couleur brun-rouge. Elle est acidifiée par une solution d'acide chlorhydrique de normalité 5N et on effectue une extraction à l'hexane. La phase organique est lavée à l'eau jusqu'à neutralité, séchée sur du sulfate de magnésium et évaporée à l'évaporateur rotatif. Le produit brut

cristallise à - 18°C et en rajoutant un peu d'éther de pétrole, on obtient un solide beige clair dont le point de fusion est d'environ 33°C. Le rendement de la réaction est de l'ordre de 35 %.

. Réaction 3 : synthèse du para hydroxy benzoate de méthyle.

50 g d'acide 4 hydroxy benzoïque (soit 0,36 mole) sont dissous dans le méthanol dans un erlenmeyer de 1 litre. On refroidit le mélange jusqu'à une température d'environ 5°C. On coule alors goutte à goutte 70 ml de chlorure d'acétyle (soit 1 mole) et on laisse revenir à température ambiante. Une agitation magnétique est entretenue pendant une douzaine d'heures. Le méthanol est alors chassé sous vide, de même que l'acide chlorhydrique qui s'est formé et le chlorure d'acétyle restant. On recueille 55 g d'un produit brut solide. A ce stade, le rendement de la réaction est de 99 %. Une recristallisation dans l'éthanol fournit 37 g de produit pur dont le point de fusion est de 123°C. Le rendement global de la réaction est de 67 %.

. Réaction 6 : synthèse de l'acide 4[métha, α - chloro ou acryloyloxy] alkyloxy benzoïque.

On place dans un erlenmeyer de 100 ml équipé d'un Dean-Stark : 10 g (0,032 mole) d'acide 4 [hydroxyalkyloxy] benzoïque, 1,7 g d'acide para toluène sulfonique monohydraté, 0,6 g d'hydroquinone, 19,2 g (0,22 mole) d'acide méthacrylique distillé et 50 ml de benzène. Le mélange est porté à reflux pendant 17 heures. On rajoute à froid 100 ml d'éther. On obtient une solution organique qui est lavée à l'eau plusieurs fois, séchée sur du sulfate de magnésium et évaporée aux trois quarts. On obtient un solide que l'on filtre et qu'on lave à l'éther. Le produit brut est recristallisé deux fois dans l'éthanol. Le rendement de la réaction est de 35 %.

C'est l'espèce méthacrylique qui a été décrite ci-dessus. Les espèces acrylique ou α - chloroacrylique s'obtiennent de la même manière à condition de respecter les proportions molaires.

Les acides obtenus à l'issue de la réaction 6 présentent des propriétés de cristaux liquides. A titre d'exemple :

- l'acide 4[méthacryloyloxy] undécanoxy benzoïque de formule :

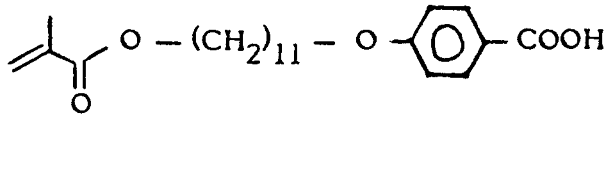

possède un point de fusion à 108°C lorsque l'on passe de l'état cristallin à l'état isotrope et présente les successions de phases suivantes :
K 69°C [N] 99° C I, K désignant la phase cristalline, N une phase nématique et I la phase isotrope. Les crochets désignent une mésophase monotrope.

- l'acide 4 [acryloyloxy] undécanoxy benzoïque de formule :

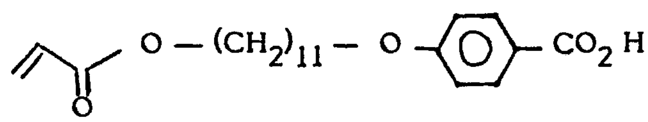

présente les successions de phases suivantes :

$K_1$ 97,7°C $K_2$ 101°C N 111°C I

$K_1$ et $K_2$ étant chacune une phase cristalline particulière.

. Réaction 7 : obtention des chlorures d'acide. On va décrire l'obtention de l'espèce acrylique. Les espèces méthacrylique et α - chloroacrylique s'obtiennent par le même mode pourvu que l'on respecte les proportions molaires.

On charge dans un erlenmeyer de 50 ml, 4,1 g (0,011 mole) d'acide 4 [acryloyloxy] undécanoxy benzoïque, 10 ml de chlorure de thionyle distillé, une goutte de diméthylformamide puis une spatule de 2,6 diterbutyl-paraphénol. On agite le mélange pendant 20 minutes à température ambiante. Le chlorure de thionyle restant est évacué sous haut vide et on rajoute 10 ml de tétrahydrofuranne. On obtient une solution $S_1$.

. Réaction 8 : synthèse du monomère.

On charge dans un erlenmeyer 0,97 g (0,006 mole) de 4 [3 méthylbutyloxyphénol] obtenu à l'issue de la réaction 2, 2 ml de triéthylamine et 9 ml de tétrahydrofuranne. On obtient une solution $S_2$. On ajoute à cette solution la solution $S_1$ de la réaction précédente et on laisse le mélange obtenu sous agitation pendant une douzaine d'heures à température ambiante. Le produit brut obtenu est chromatographié sur de la silice avec un mélange acétate d'éthyle/hexane (à raison de 1 volume d'acétate pour 4 volumes d'hexane) comme éluant. On récupère 300 mg de monomère pur.

Le rendement global des réactions 7 et 8 est de 25 %.

. Réaction 9 : synthèse du polymère.

Le monomère obtenu à la réaction 8 est mis dans une ampoule de

verre. On y ajoute 1 % en mole de 2-2' azoïsobutyronitrile et du toluène. L'ampoule est alors fixée sur une rampe reliée à une pompe à vide. On effectue alors quatre cycles de congélation-décongélation sous haut vide ($10^{-3}$ mm de mercure). L'ampoule est ensuite scellée sous vide et chauffée à 60°C pendant 6 heures. On ouvre l'ampoule et le contenu est coulé dans 800 ml de méthanol. Le polymère formé précipite. Le rendement de cette réaction est d'environ 70 %.

Les polymères obtenus répondent aux dénominations suivantes :

poly 4 méthacryloyloxyéthyloxy benzoate de 4' 3 méthylbutyloxy phényl
poly 4 méthacryloyloxypropyloxy benzoate de 4' 3 méthylbutyloxy phényl
poly 4 méthacryloyloxybutyloxy benzoate de 4' 3 méthylbutyloxy phényl
poly 4 méthacryloyloxypentyloxy benzoate de 4' 3 méthylbutyloxy phényl
poly 4 méthacryloyloxyhexyloxy benzoate de 4' 3 méthylbutyloxy phényl
poly 4 méthacryloyloxyheptyloxy benzoate de 4' 3 méthylbutyloxy phényl
poly 4 méthacryloyloxyoctyloxy benzoate de 4' 3 méthylbutyloxy phényl
poly 4 méthacryloyloxynonyloxy benzoate de 4' 3 méthylbutyloxy phényl
poly 4 méthacryloyloxydécyloxy benzoate de 4' 3 méthylbutyloxy phényl
poly 4 méthacryloyloxyundécyloxy benzoate de 4' 3 méthylbutyloxy phényl

poly 4 acryloyloxyéthyloxy benzoate de 4' 3 méthylbutyloxy phényl
poly 4 acryloyloxypropyloxy benzoate de 4' 3 méthylbutyloxy phényl
poly 4 acryloyloxybutyloxy benzoate de 4' 3 méthylbutyloxy phényl
poly 4 acryloyloxypentyloxy benzoate de 4' 3 méthylbutyloxy phényl
poly 4 acryloyloxyhexyloxy benzoate de 4' 3 méthylbutyloxy phényl
poly 4 acryloyloxyheptyloxy benzoate de 4' 3 méthylbutyloxy phényl
poly 4 acryloyloxyoctyloxy benzoate de 4' 3 méthylbutyloxy phényl
poly 4 acryloyloxynonyloxy benzoate de 4' 3 méthylbutyloxy phényl
poly 4 acryloyloxydécyloxy benzoate de 4' 3 méthylbutyloxy phényl
poly 4 acryloyloxyundécyloxy benzoate de 4' 3 méthylbutyloxy phényl

poly 4 α - chloroacryloyloxyéthyloxy benzoate de 4' 3 méthylbutyloxy phényl

poly 4 α - chloroacryloyloxypropyloxy benzoate de 4' 3 méthylbutyloxy phényl

poly 4 α - chloroacryloyloxybutyloxy benzoate de 4' 3 méthylbutyloxy phényl

poly 4 α - chloroacryloyloxypentyloxy benzoate de 4' 3 méthylbutyloxy phényl

poly 4 α - chloroacryloyloxyhexyloxy benzoate de 4' 3 méthylbutyloxy phényl

poly 4 α - chloroacryloyloxyheptyloxy benzoate de 4' 3 méthylbutyloxy phényl

poly 4 α - chloroacryloyloxyoctyloxy benzoate de 4' 3 méthylbutyloxy phényl

poly 4 α - chloroacryloyloxynonyloxy benzoate de 4' 3 méthylbutyloxy phényl

poly 4 α - chloroacryloyloxydécyloxy benzoate de 4' 3 méthylbutyloxy phényl

poly 4 α - chloroacryloyloxyundécyloxy benzoate de 4' 3 méthylbutyloxy phényl

## PROPRIETES DES CORPS SYNTHETISES

Les thermogrammes obtenus par analyse thermique différentielle peuvent être décrits de la façon suivante : à haute température un exotherme caractérise la transition du premier ordre liquide isotrope-mésophase due aux chaînes latérales tandis qu'à basse température une transition vitreuse (Tg) est observée. Celle-ci est caractéristique de la chaîne principale du polymère. Des analyses au microscope polarisant montrent que la texture de la mésophase peut être "gelée" sans changement dans l'état vitreux. La transition vitreuse des polymères synthétisés n'est pas décelable en analyse enthalpique différentielle. Il est possible d'en avoir un ordre de grandeur par l'intermédiaire de copolymères pour lesquels la transition vitreuse est visible.

A titre d'exemples non limitatifs, on va donner les diagrammes de

phases de deux monomères selon l'invention correspondant à n = 11. L'espèce méthacrylique possède la formule chimique suivante :

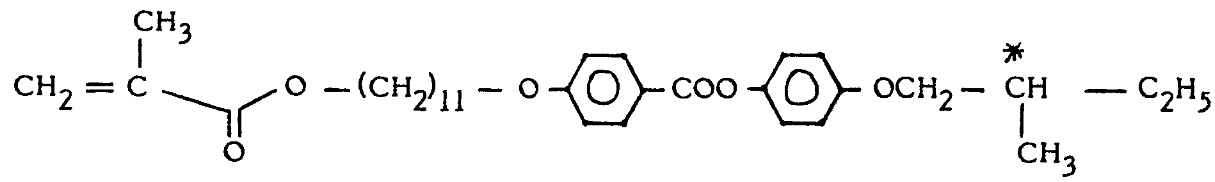

Son diagramme de phase est :

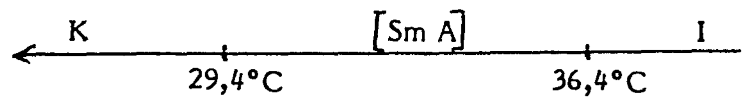


L'expression [Sm A] indiquant une phase smectique A monotrope. L'espèce acrylique possède la formule chimique suivante :

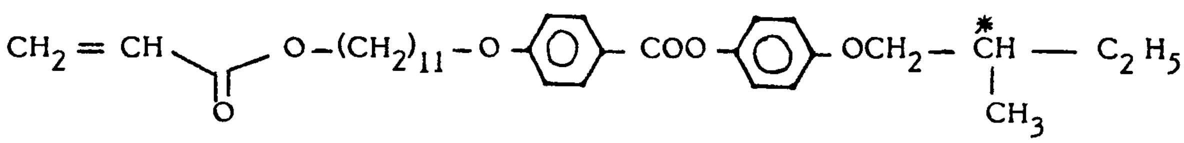

Son diagramme de phase est :

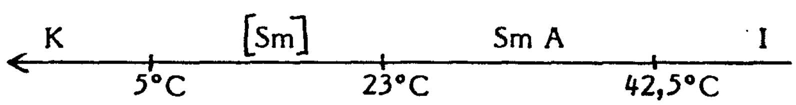


Sm A désignant une phase smectique A. La mésophase [Sm] s'étendant de 5°C à 23°C est monotrope et possède les propriétés d'une phase smectique ordonnée et tiltée.

Les polymères formés à partir des monomères selon l'invention possèdent la formule chimique générale suivante :

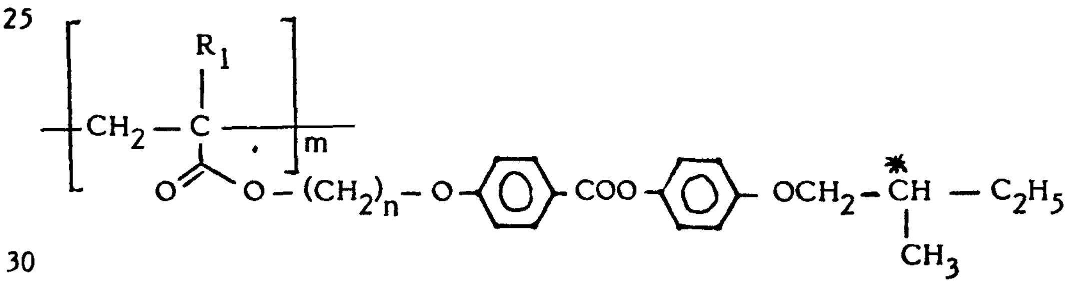

m désignant le degré de polymérisation,

$R_1$ étant le groupe méthyle, le chlore ou l'hydrogène.

Les propriétés de ces polymères sont résumées dans le tableau 1

placé à la fin de la description. Le tableau 1 regroupe cinq exemples de polymères :

pour $R_1 = CH_3$ avec n = 2 (composé I) ou n = 11 (composé II)

pour $R_1 = H$ avec n = 2 (composé III) ou n = 11 (composé IV)

et pour $R_1 = Cl$ avec n = 6 (composé V).

Les polymères I et V obtenus présentent tous une mésophase smectique $M_2$ et une autre phase à plus basse température $M_1$. La température de transition vitreuse Tg a été calculée théoriquement à partir de copolymères. Elle n'a pu être déterminée pour tous les composés. $\Delta H$ représente l'enthalpie de transition en cal/g. Le tableau 1 regroupe également les températures de transition des phases $M_1$ à $M_2$ ($T_{M_1/M_2}$) et $M_2$ à isotrope ($T_{M_2/I}$).

On pouvait penser que des groupements mésogènes chiraux permettraient d'obtenir des phases cholestériques. En fait, les homopolymères préparés avec de tels monomères ne présentent que des phases smectiques. Il est possible néanmoins de préparer par copolymérisation des composés macromoléculaires conduisant par chauffage à des masses fondues cholestériques. On peut en effet induire une distorsion suffisante de la structure smectique en choisissant par exemple comme comonomères une substance chirale et un composé connu qui conduit à un polymère possédant une phase nématique. Ce polymère peut être le suivant :

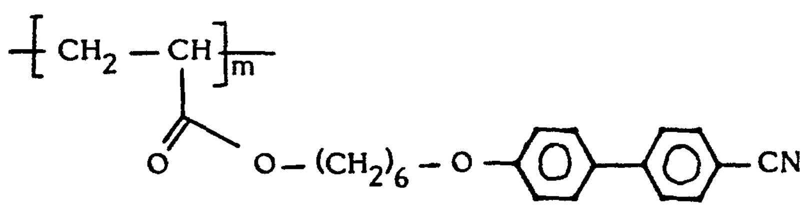

qui possède le thermogramme suivant :

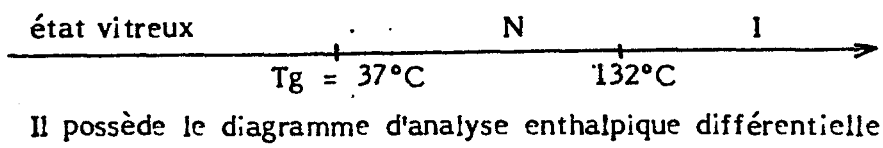


Il possède le diagramme d'analyse enthalpique différentielle reproduit à la figure 1. L'axe des ordonnées de ce diagramme représente la chaleur massique Cm en mcal/s et l'axe des abscisses la température T en °C. Ce diagramme a permis le relevé des températures de transition

vitreuse Tg et de transition de la phase nématique à la phase isotrope. Il a été tracé en partant du produit cristallisé, par observation de son échauffement jusqu'à la fusion. La phase nématique de ce polymère s'étend sur 95°C.

A partir de ce composé et d'un composé selon l'invention on peut élaborer des copolymères de formule chimique générale :

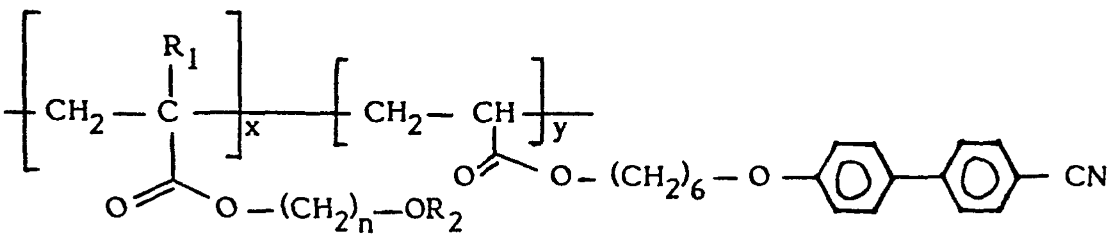

avec $R_1$ = $CH_3$, Cl ou H

et $R_2$ = 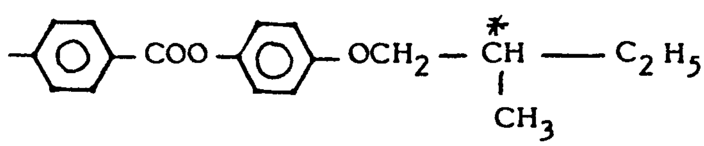

x et y étant des coefficients de proportionnalité tels que $x + y = 1$.

Le tableau 2, placé en fin de description, résume les propriétés d'un tel copolymère. Il comprend les copolymères désignés sous les références VI et VII pour lesquels $R_1 = CH_3$ et $n = 11$. D'après ce tableau, on s'aperçoit que la nature de la mésophase évolue suivant les proportions des constituants du copolymère. La mésophase du copolymère VI ($x = y = 0,5$) est smectique alors que celle du copolymère VII ($x = 0,05$, $y = 0,95$) est cholestérique. Les températures de transition Tg et $T_{M/I}$ ont été déterminées d'après les diagrammes d'analyse enthalpique différentielle. Les figures 2 et 3 représentent de tels diagrammes, respectivement pour les copolymères référencés VI et VII et étudiés ci-dessus. L'axe des ordonnées de ces diagrammes représente la chaleur massique Cm en millicalories par seconde (mcal/s) et l'axe des abscisses la température T en °C. Sur ces diagrammes, les températures de transition de la phase isotrope à la phase mésomorphe sont particulièrement bien observables. Lorsque le coefficient x dans le copolymère est trop élevé, c'est l'ordre smectique qui l'emporte ($\Delta H_{S/I} \simeq 2,3$ cal/g). Par contre, lorsque le taux de monomère chiral diminue, la mésophase cholestérique apparaît ($\Delta H_{N^*/I} \simeq 0,6$ cal/g). Les diagrammes des figures 2 et 3 ont été tracés en étudiant le refroidissement des produits en fusion. Pour le produit VI, la transition de la mésophase à la phase isotrope s'effectue à 125° C et au refroidissement la transition s'effectue à 120,3°C. Pour le produit VII, ces transitions s'effectuent respectivement pour 127°C et 122°C.

Il entre également dans le cadre de l'invention de réaliser des copolymères à partir des espèces méthacryliques, acryliques ou $\alpha$- chloro-acryliques. A titre d'exemple non limitatif, le copolymère suivant (référence VIII) a été synthétisé :

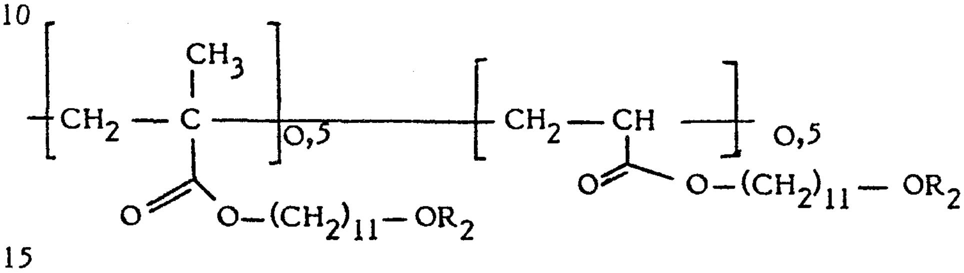

Le tableau 3, placé en fin de description résume les principales caractéristiques de ce copolymère. La phase $M_1$ représente l'état vitreux.

Au moyen de ces quelques exemples, on a montré la grande potentialité de cette nouvelle famille de polymères thermotropes à chaînes latérales ayant une structure chirale. On peut par suite obtenir des films ayant des propriétés optiques anisotropes et qui trouveraient des applica tions dans le domaine de l'optique non linéaire avec addition de colorants ou de molécules ayant à la fois des groupes donneurs et accepteurs d'électrons. De même, la possibilité d'obtenir par copolymérisation la mésophase cholestérique permet d'envisager la préparation de filtres, de réflecteurs, d'appareils de mesure de forces, etc...

TABLEAU I

| Réf | $R_1$ | n | $T_{M_1/M_2}$ | $T_{M_2/I}$ | Tg | ΔH(cal/g) | Mésophase $M_2$ |
|---|---|---|---|---|---|---|---|
| I | $CH_3$ | 2 | 60°C | 143,7°C | - | $H_{M_2/I} = 2,2$ | Smectique |
| II | $CH_3$ | 11 | 51°C | 98,5°C | -10°C | $H_{M_1/M_2} \simeq 2,3$ $H_{M_2/I} \simeq 3$ | Smectique |
| III | H | 2 | 100°C | 134,7°C | - | $H_{M_2/I} = 1$ | Smectique |
| IV | H | 11 | 53,4°C | 93,4°C | - | $H_{M_2/M_1} = 2,9$ $H_{M_2/I} = 3,3$ | Smectique |
| V | Cl | 6 | | 85,5°C | 36,2°C | $H_{M_2/I} = 2,3$ | Smectique |

TABLEAU 2

| Réf | x | y | $T_{M/I}$ | Tg | ΔH | mésophase M |
|---|---|---|---|---|---|---|
| VI | 0,5 | 0,5 | 125°C | 14°C | 2,3 cal/g | smectique |
| VII | 0,05 | 0,95 | 127°C | 30°C | 0,65 cal/g | cholestérique |

TABLEAU 3

| Réf | $T_{M_1/M_2}$ | $T_{M_2/I}$ | ΔH (cal/g) | mésophase $M_2$ |
|---|---|---|---|---|
| VIII | 46°C | 101°C | $H_{M_2/I} = 3,07$ | smectique |

## REVENDICATIONS

1. Polymère thermotrope du type à groupe latéral mésogène et présentant au moins une phase mésomorphe, caractérisé en ce qu'il est obtenu par polymérisation d'au moins un monomère $M_1$ de formule chimique générale :

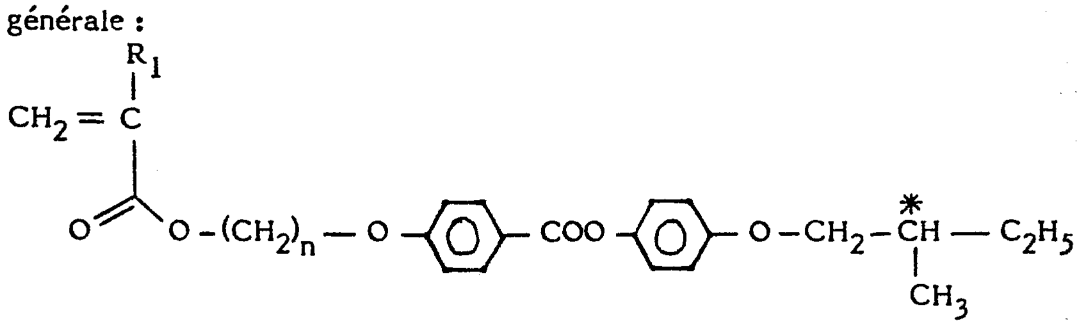

dans laquelle $R_1$ est un radical choisi parmi les radicaux $CH_3$, Cl ou H et $2 \leqslant n \leqslant 11$.

2. Polymère thermotrope selon la revendication 1, caractérisé en ce que $R_1$ est le radical $CH_3$ et n = 2 ou 11.

3. Polymère thermotrope selon la revendication 1, caractérisé en ce que $R_1$ est le radical H et n = 2 ou 11.

4. Polymère thermotrope selon la revendication 1, caractérisé en ce que $R_1$ est le radical Cl et n = 6.

5. Polymère thermotrope selon la revendication 1, caractérisé en ce qu'il est obtenu par polymérisation de deux monomères, ledit monomère $M_1$ et un second monomère $M_2$, ce second monomère étant susceptible de donner par polymérisation un produit possédant au moins une phase nématique, la proportion de ces monomères dans ledit polymère étant telle qu'elle permette l'existence d'une phase cholestérique.

6. Polymère thermotrope selon la revendication 5, caractérisé en ce que :

- pour ledit monomère $M_1$ : $R_1$ = $CH_3$ et n = 11,
- ledit second monomère $M_2$ a pour formule chimique

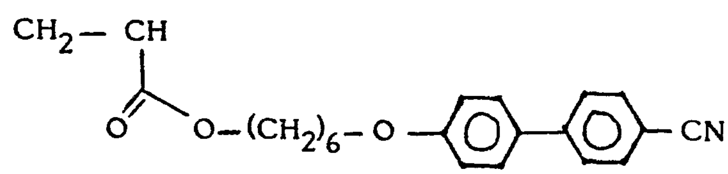

- les proportions des monomères $M_1$ et $M_2$ dans le polymère étant respectivement de 0,05 et 0,95.

7. Polymère thermotrope selon la revendication 1, caractérisé en ce qu'il est obtenu par polymérisation de deux monomères $M_1$ de proportions égales dans ledit polymère, l'un des monomères ayant $R_1 = CH_3$ et n = 11 et l'autre monomère ayant $R_1$ = H et n = 11.

8. Procédé de fabrication d'un polymère thermotrope selon l'une quelconque des revendications 1 à 4, caractérisé en ce qu'il comprend les étapes suivantes :

- 1ère étape : synthèse du 2 méthyl 1 bromobutane par action du tribromure de phosphore sur le 2 méthyl 1 butanol,

- 2ème étape : synthèse du 4(3 méthylbutyloxyphénol) par action du 2 méthyl 1 bromobutane obtenu à la 1ère étape sur l'hydroquinone,

- 3ème étape : synthèse du para hydroxy benzoate de méthyle par estérification de l'acide 4 hydroxy benzoïque,

- 4ème étape : synthèse du para [hydroxyalkyloxy] benzoate de méthyle par action de l'ω-bromoalcanol sur le para hydroxy benzoate de méthyl obtenu à la 3ème étape,

- 5ème étape : synthèse de l'acide para [hydroxyalkyloxy] benzoïque par saponification de l'ester obtenu à la 4ème étape,

- 6ème étape : synthèse de l'acide 4 [méthacryloyloxy] alkyloxy benzoïque, de l'acide 4 [acryloyloxy] alkyloxy benzoïque ou de l'acide 4[α - chloroacryloyloxy] alkyloxy benzoïque par estérification azéotropique de l'acide obtenu à la 5ème étape avec l'acide méthacrylique, acrylique ou α-chloroacrylique ;

- 7ème étape : chloruration de l'acide obtenu à la 6ème étape ;

- 8ème étape : synthèse du monomère $M_1$ par réaction du chlorure d'acide obtenu à la 7ème étape et de l'alkoxyphénol obtenu à la 2ème étape ;

- et 9ème étape : polymérisation du monomère $M_1$ seul ou en présence d'au moins un autre monomère.

FIG_1

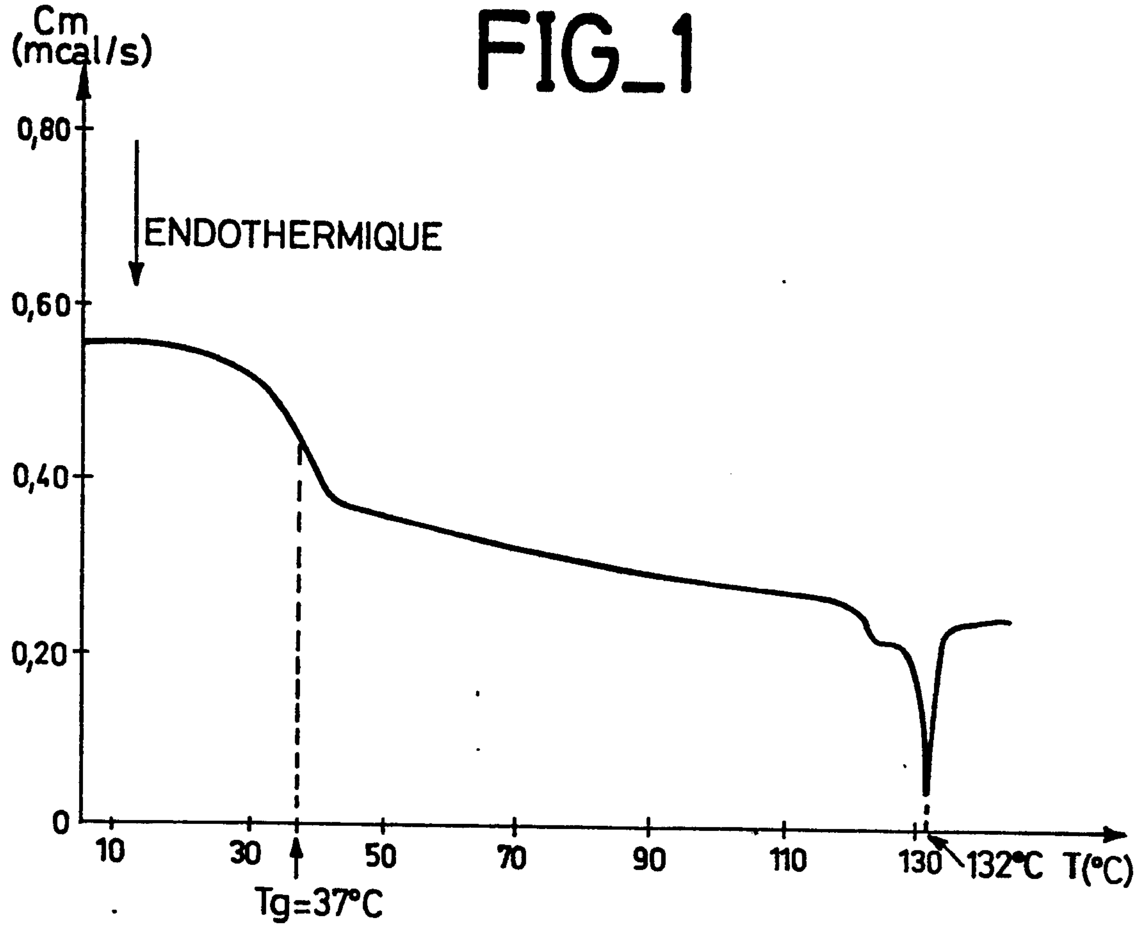
Cm
(mcal/s)
0,80
0,60
0,40
0,20
0
ENDOTHERMIQUE
10
30
50
70
90
110
130
132°C
T(°C)
Tg=37°C

FIG_2

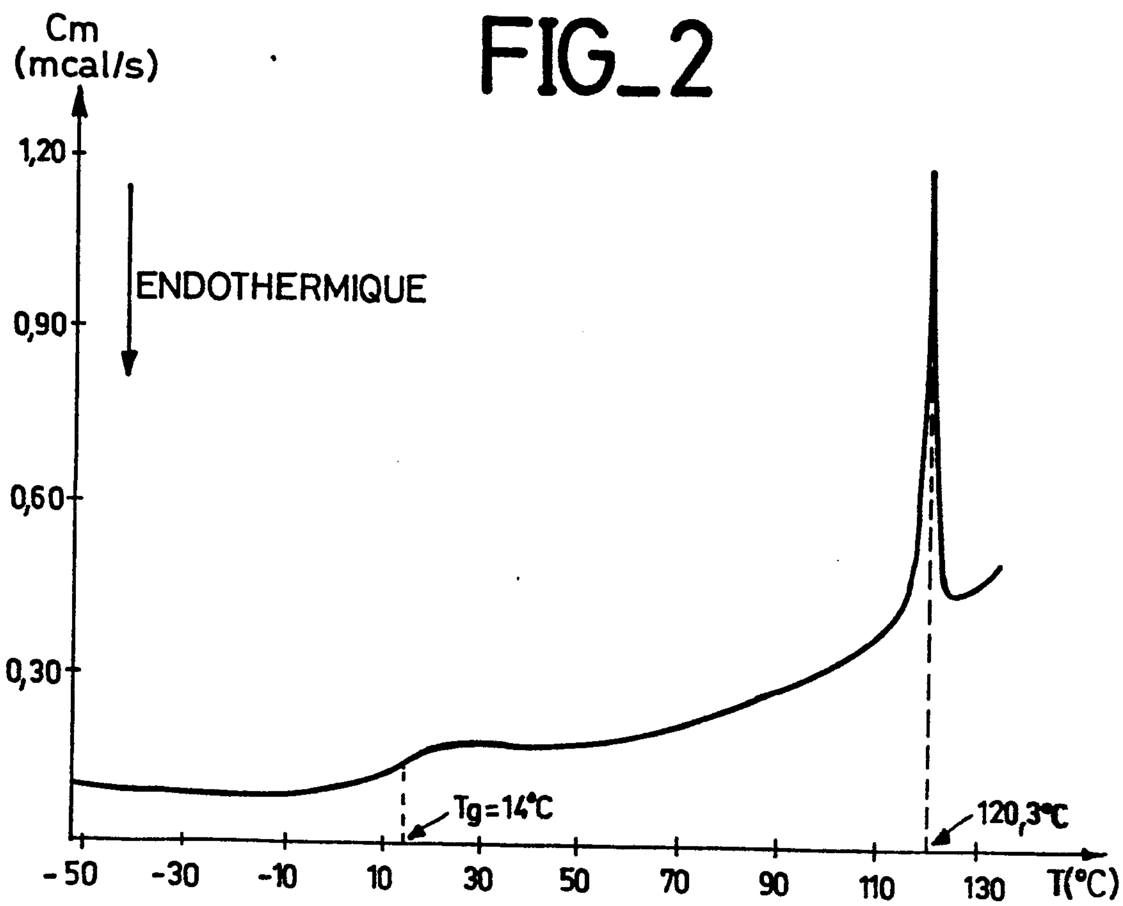
Cm
(mcal/s)
1,20
0,90
0,60
0,30
ENDOTHERMIQUE
Tg=14°C
120,3°C
-50
-30
-10
10
30
50
70
90
110
130
T(°C)

# FIG_3

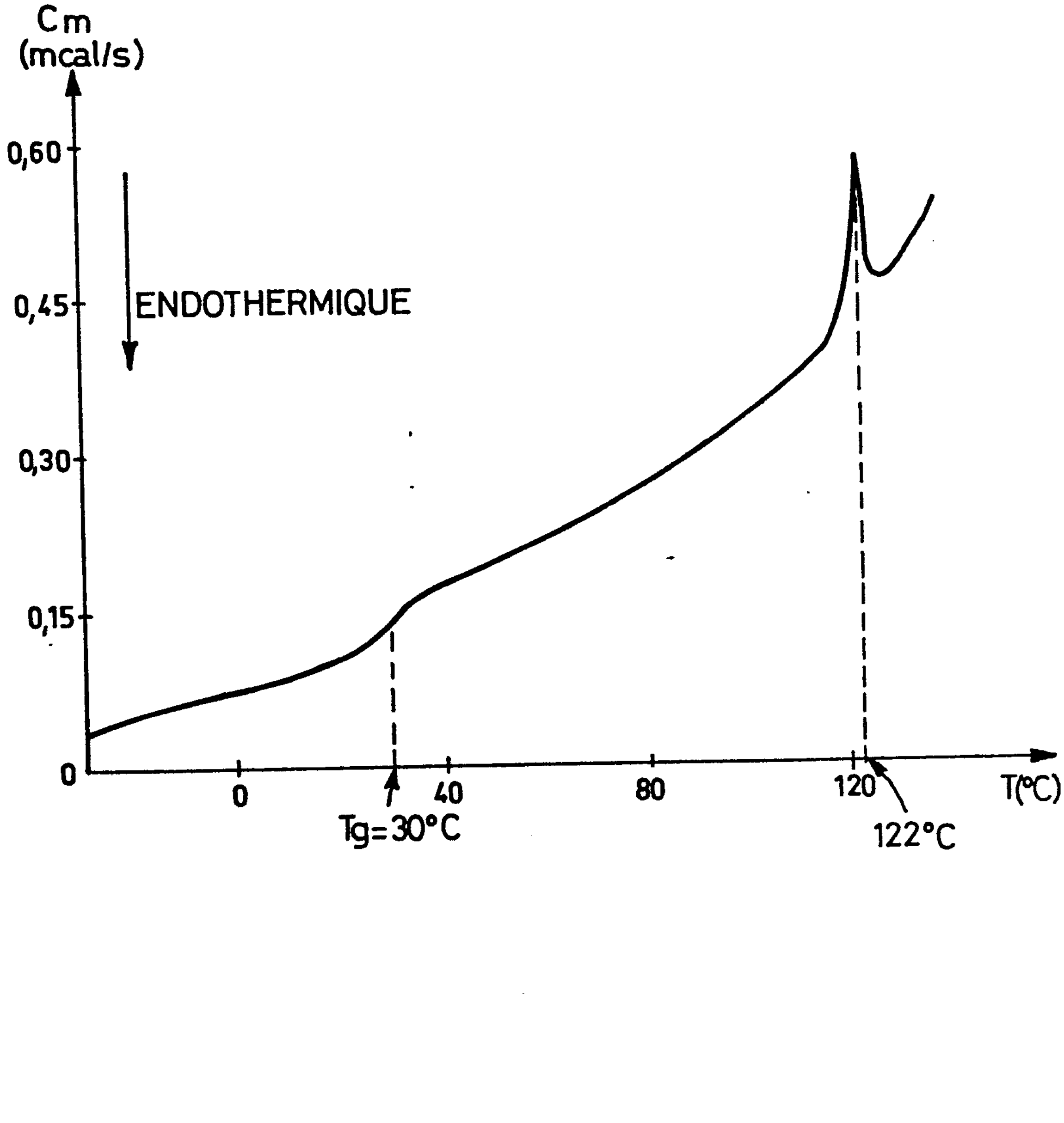
Cm
(mcal/s)
0,60
0,45
0,30
0,15
0
ENDOTHERMIQUE
0
40
80
120
T(°C)
Tg=30°C
122°C

Office européen des brevets

**0184482**
Numero de la demande

## RAPPORT DE RECHERCHE EUROPEENNE

EP 85 40 2166

### DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| | | | C 08 F 20/30 |
| X | EP-A-0 007 574 (BASF)<br>* Revendications 1,2 *<br>--- | 1-7 | C 09 K 19/38 |
| X | DE-A-2 722 589 (H. FINKELMANN)<br>* Revendication 1 *<br>----- | 1-7 | |
| | | | **DOMAINES TECHNIQUES RECHERCHES (Int Cl 4)** |
| | | | C 08 F<br>C 09 K<br>C 07 C |

Le present rapport de recherche a ete etabli pour toutes les revendications

| Lieu de la recherche | Date d achèvement de la recherche | Examinateur |
|---|---|---|
| LA HAYE | 18-02-1986 | CAUWENBERG C.L.M. |

CATEGORIE DES DOCUMENTS CITES

X particulièrement pertinent à lui seul
Y particulièrement pertinent en combinaison avec un autre document de la même categorie
A arrière-plan technologique
O divulgation non-écrite
P document intercalaire
T : théorie ou principe à la base de l invention
E : document de brevet antérieur, mais publié à la date de dépôt ou après cette date
D : cité dans la demande
L : cité pour d autres raisons
& : membre de la même famille, document correspondant

OEB Form 1503 03 82